(19) Europäisches Patentamt
European Patent Office
Office européen des brevets

(11) **EP 3 864 279 B1**

(12) **EUROPÄISCHE PATENTSCHRIFT**

(45) Veröffentlichungstag und Bekanntmachung des Hinweises auf die Patenterteilung:
**29.05.2024   Patentblatt 2024/22**

(21) Anmeldenummer: **19774046.7**

(22) Anmeldetag: **16.09.2019**

(51) Internationale Patentklassifikation (IPC):
*F02M 26/49* (2016.01)     *F02D 41/22* (2006.01)
*F02D 41/14* (2006.01)     *F02M 26/22* (2016.01)
*F02M 26/47* (2016.01)     *G05B 23/02* (2006.01)
*G01M 15/04* (2006.01)

(52) Gemeinsame Patentklassifikation (CPC):
**F02M 26/49; F02D 41/1405; F02D 41/221; F02M 26/22; F02M 26/47; G01M 15/04; G05B 23/0232; G05B 23/0283;** F02D 2041/1412; G05B 2219/2637; Y02T 10/40

(86) Internationale Anmeldenummer:
**PCT/EP2019/000267**

(87) Internationale Veröffentlichungsnummer:
**WO 2020/074115 (16.04.2020 Gazette 2020/16)**

(54) **VERFAHREN ZUR DETEKTION UND PRÄDIKTION DER VERSOTTUNG EINES AGR-KÜHLERS IN EINEM DIESEL-VERBRENNUNGSMOTOR**

METHOD FOR DETECTING AND PREDICTING THE FOULING OF AN EGR COOLER IN A DIESEL COMBUSTION ENGINE

MÉTHODE POUR DÉTECTER ET PRÉDIRE L'ENCRASSEMENT D'UN REFROIDISSEUR RGE DANS UN MOTEUR DIESEL À COMBUSTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.10.2018   DE 102018008000**

(43) Veröffentlichungstag der Anmeldung:
**18.08.2021   Patentblatt 2021/33**

(73) Patentinhaber: **DEUTZ Aktiengesellschaft 51149 Köln (DE)**

(72) Erfinder:
• **STEINHAUSEN, Andreas 81247 München (DE)**

• **WEYERS, Jens 50679 Köln (DE)**

(56) Entgegenhaltungen:
EP-A2- 2 056 179          WO-A1-2018/065223
AT-A2- 505 424          DE-A1-102008 001 418
DE-A1-102008 054 722          US-A1- 2012 283 963
US-A1- 2014 060 503

• **A MIRSADRAEE ET AL: "PREDICTION OF FOULING IN EGR COOLERS WITH RADIAL BASIS FUNCTION NEURAL NETWORKS",** PROCEEDINGS OF INTERNATIONAL CONFERENCE ON HEAT EXCHANGER FOULING AND CLEANING, 9. Juni 2013 (2013-06-09), XP055656953, Budapest, Hungary

EP 3 864 279 B1

**Beschreibung**

Die Erfindung betrifft ein Verfahren zur Detektion und Prädiktion des Versottungsprozesses im Abgasrückfürungskühler eines Diesel-Verbrennungsmotors nach dem Oberbegriff des Anspruchs 1 sowie einen Diesel-Verbrennungsmotor.

Der Artikel "PREDICTION OF FOULING IN EGR COOLERS WITH RADIAL BASIS FUNCTION NEURAL NETWORKS", PROCEEDINGS OF INTERNATIONAL CONFERENCE ON HEAT EXCHANGER FOULING AND CLEANING", Budapest, Ungarn, 9. - 14 Juni 2013 offenbart ein Verfahren der eingangs genannten Art. Herkömmliche Motorsteuergeräte verfügen über eine Diagnose-Funktion, die einen Fehler meldet, wenn der Abgasrückführungskühler (AGR-Kühler) bereits sehr stark versottet ist und der AGR-Massenstrom gegen Null geht. Dieses herkömmliche Verfahren generiert eine binäre Aussage über die Versottung. Zeigt es keinen Fehler, ist der AGR-Kühler nicht komplett versottet, sondern in einem beliebigen Zustand zwischen nicht versottet und vollständig versottet. Das Verfahren bietet keine Informationen über den derzeitigen und zukünftigen Systemzustand sowie Informationen über verschiedene Versottungsgrade zu verschiedenen Betriebszeiten. Diese Zwischenzustände (Abstufungsgerade der Versottung) sind jedoch wichtig, damit der Systemzustand zur jeder Zeit bekannt ist. Ist der Versottungsgrad zum Zeitpunkt eines Regelserviceintervalls hoch, hat der Service die Möglichkeit, den AGR-Kühler zu tauschen. Damit kann verhindert werden, dass ein potentieller Verschluss des AGR-Kühlers durch Versottung zwischen zwei Regelwartungsintervallen auftritt und eine Downtime des Motors verursacht. Nachfolgend wird ein Verfahren beschrieben, welches den Versottungsgrad eines AGR-Kühlers während der Betriebszeit des Motors erkennt und darüber hinaus auf Basis des Systemzustands und der Betriebszeit einen Forecast für den zukünftigen Versottungsverlauf berechnet.

Aufgabe der vorliegenden Erfindung ist es, einen Diesel-Verbrennungsmotor und ein Verfahren zum Betreiben derselben zu schaffen, das die oben genannten Nachteile vermeidet, eine Aussage über den aktuellen Zustand sowie eine Vorhersage der Versottung des Abgasrückführungskühlers gestattet.

Die Aufgabe wird durch ein Verfahren nach Anspruch 1 und einen Diesel-Verbrennungsmotor nach Anspruch 3 gelöst.

Der Vorteil zum bisherigen Verfahren ist, dass der Versottungsgrad des AGR-Kühlers zu jeder Zeit bekannt ist. Die Erkenntnis über den Systemzustand ermöglicht eine frühzeitige Aussage, ob und wann eine Wartung des AGR-Kühlers notwendig ist (Predictive Maintenance). Weitere Vorteile sind:

1. Das Verfahren ermöglicht es, bei potentieller Emissionsüberschreitung ($NO_x$) durch Versottung des AGR-Kühlers frühzeitig einzugreifen.
2. Das Verfahren bietet die Möglichkeit zum frühzeitigen Verhindern von negativen Beeinflussungen im Abgasnachbehandlungssystem (z. B. Kristallisation im SCR).
3. Das Verfahren ermöglicht die Erhöhung der Motorlaufzeit.

Weitere wichtige Merkmale ergeben sich aus den Unteransprüchen, aus den Zeichnungen und aus der nachfolgenden Beschreibung eines bevorzugten Ausführungsbeispiels. Es zeigen:

Fig. 1:   Visualisierung der Verfahrensschritte vom DoE Plan bis zur Handlungsempfehlung,
Fig. 2:   DoE Plan Drehmoment [Nm] Drehzahl [rpm], Kennfeldbereich hoher AGR-Rate unter der Dachkurve,
Fig. 3:   schematische Darstellung der Berechnung im Motorsteuergerät aus Fig. 1,

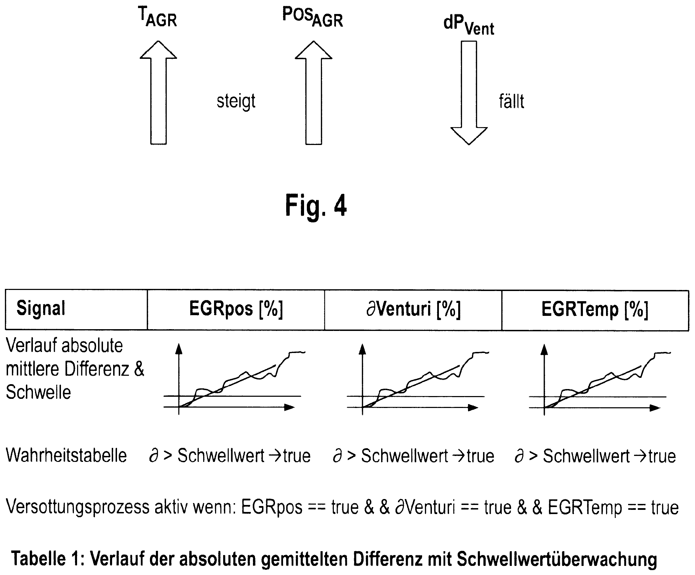

Fig. 4:   charakteristische Prozesstendenzen,
Fig. 5:   Verlauf der Venturi Rohr Druckdifferenz in [%] bei 0 %, 70 % und bei 85 % Versottung,
Fig. 6:   Verlauf der AGR Steller Positionsdifferenz in [%] bei 0 %, 70 % und bei 85 % Versottung.

Im ersten Schritt wird der Ist-Zustand des AGR-Kühlers vermessen. Zur Ermittlung des Ist-Zustands des AGR-Kühlers benötigt das Verfahren Referenzwerte. Als Referenz wird ein nicht versotteter AGR-Kühler mit Hilfe eines Design of Experiment Messplans am Prüfstand vermessen. Gemessen werden die folgenden drei Größen:

1. Abgasrückführungs- Steller/Ventil Ist Position [%]
2. Venturi Differenzdruck in der AGR-Strecke [hPa]
3. Temperatur hinter AGR-Kühler [°C]

Diese drei Messgrößen (Soll-Werte) werden nachfolgend Referenzwerte genannt. Grundsätzlich berechnet das Verfahren die Differenzen zwischen den Ist- und den Referenzwerten. Die Referenzwerte werden zur Betriebszeit mit Hilfe von zuvor auf die Referenzwerte trainierten künstlichen Neuronalen Netzen berechnet (Regression). Die künstlichen Neuronalen Netze berechnen die Referenzwerte für den optimalen (neuwertigen) Zustand des AGR-Kühlers. Das optimale Verhalten zu trainieren ist von Vorteil, da dies wesentlich unkomplizierter ist als das Training von Fehlerzuständen, da diese zunächst reproduziert werden müssten, da AGR-Kühler mit verschiedenen Versottungsgraden vermessen werden müssten, was einen hohen Aufwand bedeuten würde. Durch Subtraktion der zur Betriebszeit gemessenen Ist-Werte für die AGR-Stellerposition, der Venturi-Druckdifferenz, die Temperatur nach der AGR und den Referenzwerten werden Abweichungen identifiziert. Das Verhältnis der Abweichungen zueinander gibt Aufschluss über den Grad der Versottung zum Messzeitpunkt. Der Forecast wird mittels Zeitreihenanalyse und Exponentieller Glättung zweiter Ordnung für jede Abweichung berechnet.

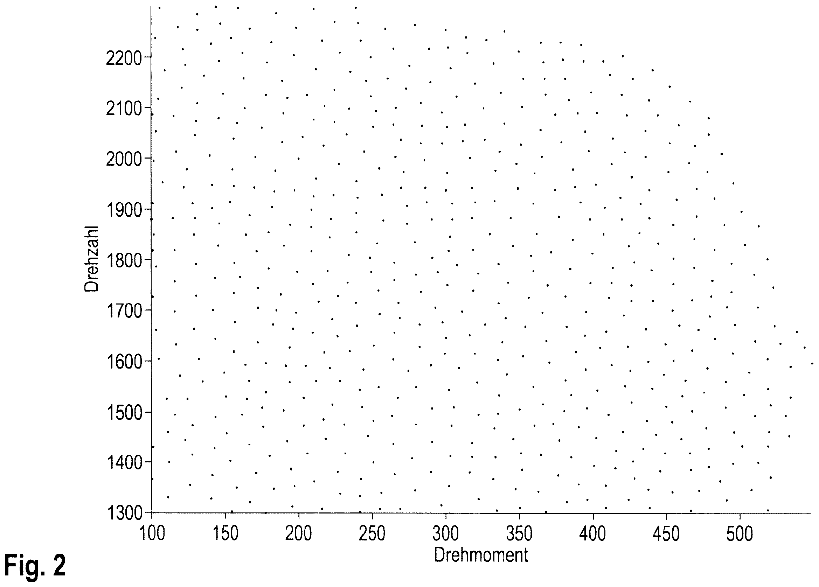

Die Referenzwerte oder auch Trainingsdaten werden am Prüfstand ermittelt. Dafür wird ein AGR-Kühler am Motor montiert, welcher sich in einem etwa neuwertigen Zustand befindet. Hierbei muss beachtet werden, dass der AGR-Kühler eine kurze Betriebszeit oder auch Warmlaufphase benötigt, um den optimalen Wirkungsgrad zu erreichen. Die Referenzwerte werden ausschließlich in einem Bereich unter der Dachkurve (Drehmoment zu Drehzahl) aufgezeichnet, in dem die AGR-Rate hoch ist. Um dies zu gewährleisten und den Prüfstandsaufwand zu reduzieren, wird für die Vermessung ein Design of Experiment (DoE) Messplan mit z. B. 600 Stützstellen erstellt, wie dies in Fig. 2 dargestellt wird. Das Prüfstandsystem liest den DoE Messplan ein, stellt die Stützstellen ein und vermisst autonom die selektierten Referenzwerte.

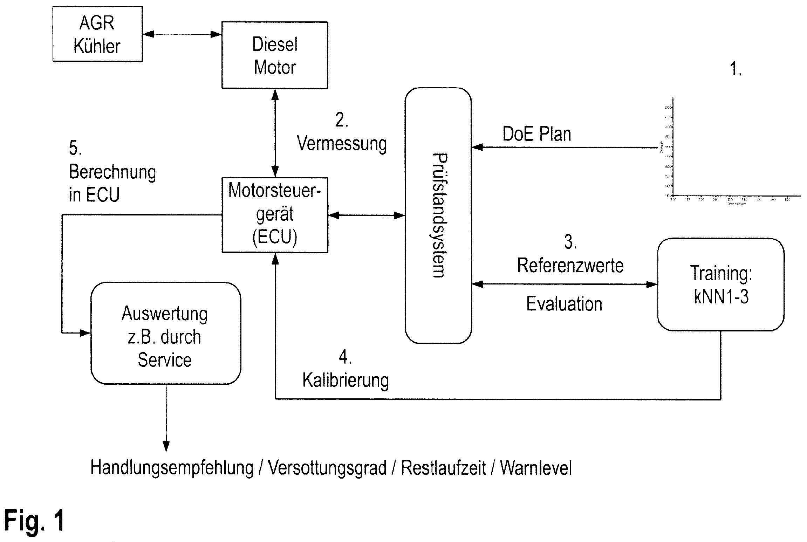

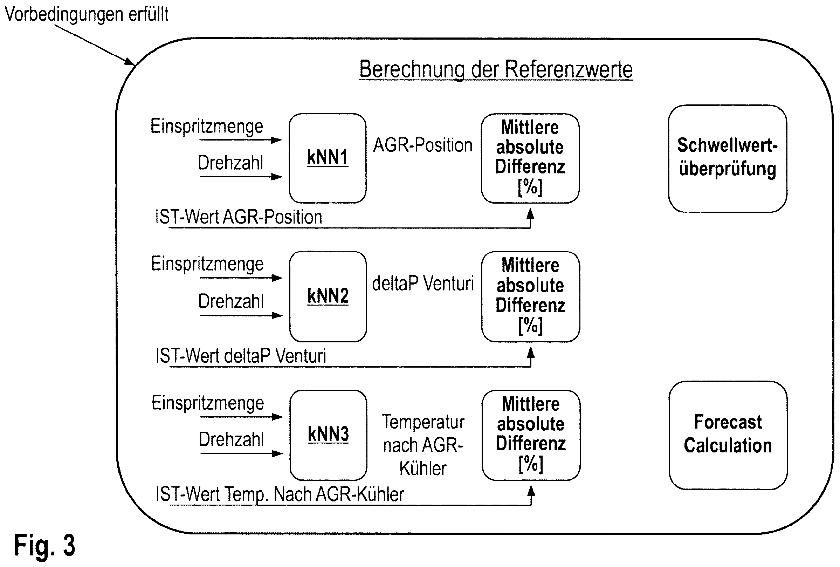

Im nächsten Schritt können die vermessenen Trainingsdaten zum Training der künstlichen Neuronalen Netze (kNN) verwendet werden. Nach dem erfolgreichen Training der Netze werden ihre Gewichte in die Steuergeräte-Software übertragen (Kalibrierung, siehe Punkt 4. in Fig. 1). Hierfür muss die Berechnung der künstlichen Neuronalen Netze gemäß Fig. 3 im Steuergerät hinterlegt sein.

Fig. 3 zeigt den schematischen Aufbau der Berechnung im Steuergerät. Vor jeder Berechnung eines Referenzwertes werden bestimmte Vorbedingungen geprüft. Diese sollten z. B. sein: Umgebungsdruck, Öl- oder Kühlmitteltemperatur, Umgebungstemperatur, Ladeluftdruck, Drehzahl, Einspritzmenge, kurzzeitiger stationärer Betrieb. Erst wenn sich alle Größen der Vorbedingungen in vordefinierten Bereichen bzw. Grenzen befinden (alle Vorbedingungen erfüllt), berechnen die Netze jeweils den aktuellen Referenzwert. Die Berücksichtigung und Einhaltung der Vorbedingungen sorgt dafür, dass die Ist- und Referenzwerte nur dann miteinander verglichen werden, wenn der aktuelle Motorbetriebszustand mit dem Motorbetriebszustand während der DoE Vermessung identisch ist. Nur in diesem Fall sind Ist- und Referenzwerte vergleichbar! Sofern alle Vorbedingungen erfüllt sind, berechnet jedes Netz (kNNx) aus dem jeweiligen Eingangsvektor (Einspritzmenge und Drehzahl) den zum aktuellen Betriebszustand gehörigen Referenzwert (Pfeile). Nach der Berechnung folgt der Vergleich des Referenzwertes mit dem aktuellen (zur Laufzeit gemessenen) IstWert. Von der Differenz wird das arithmetische Mittel über den vordefinierten Beobachtungszeitraum (Motorbetriebszeit) berechnet. Die gemittelte Differenz zwischen Ist- und Referenzwert ist eine Kennzahl für den aktuellen AGR-Kühlerzustand. Die Abhängigkeiten der Messwerte untereinander können durch folgende Tendenzen approximiert werden:

$T_{AGR}$        = Temperatur nach AGR Strecke [°C]
$Pos_{AGR}$      = AGR Steller Position [%], 0 % geschlossen, 100 % voll geöffnet
$dP_{Vent}$      = Druckdifferenz am Venturi Rohr [hPa]

Sind alle drei Tendenzen nachweisbar, dann hat der Versottungsprozess bereits begonnen. Wenn der AGR-Kühler versottet, steigt als erstes die Temperatur hinter dem Kühler, da dieser durch Versottung der Kühlfläche weniger Kühlleistung erbringen kann. Der Anstieg der Temperatur hinter AGR-Kühler ist die erste messbare Differenz ($T_{AGR}$), die erkannt werden kann. Reduziert sich der Querschnitt im Kühler weiterhin, nimmt der Massenfluss im AGR-Kühler ab, woraufhin der Differenzdruck im Venturi ebenfalls eine abnehmende Tendenz zeigt. Dies hat zur Folge, dass die Zylinder-Füllungs-Regelung versucht, den Massenflussverlust auszugleichen, indem die Regelung den AGR-Steller weiter öffnet (als im nicht versotteten Zustand nötig wäre). Diese korrigierte AGR-Position (Offset) ist die zweite Differenz ($Pos_{AGR}$), die zu erkennen ist.

Angenommen, der Querschnitt verringert sich massiv, dann wird ein Versottungsgrad erreicht, bei dem selbst die gänzliche Öffnung des AGR-Stellers nicht ausreicht, um den Soll-Massenfluss einzuregeln. Nun ist die dritte Differenz zu erkennen, nämlich die deutliche Abnahme des Differenzdrucks im Venturi-Rohr ($dP_{Vent}$). Jetzt können die mittleren Differenzen ($\partial$) z. B. mit Schwellwerten (Linien) verglichen werden und abgeleitete Warnlevel definiert und gespeichert werden (vgl. Tabelle 1). Diese Warnlevels oder auch Zustandsindikatoren können über eine Diagnose-Software vom Service ausgelesen werden. Der Service hat nun die Möglichkeit, auf Basis der Zustandsindikatoren zu reagieren. Alternativ könnten die Zustandsindikatoren via CAN Bus und Telemetrie zur weiteren Verarbeitung drahtlos kommuniziert werden.

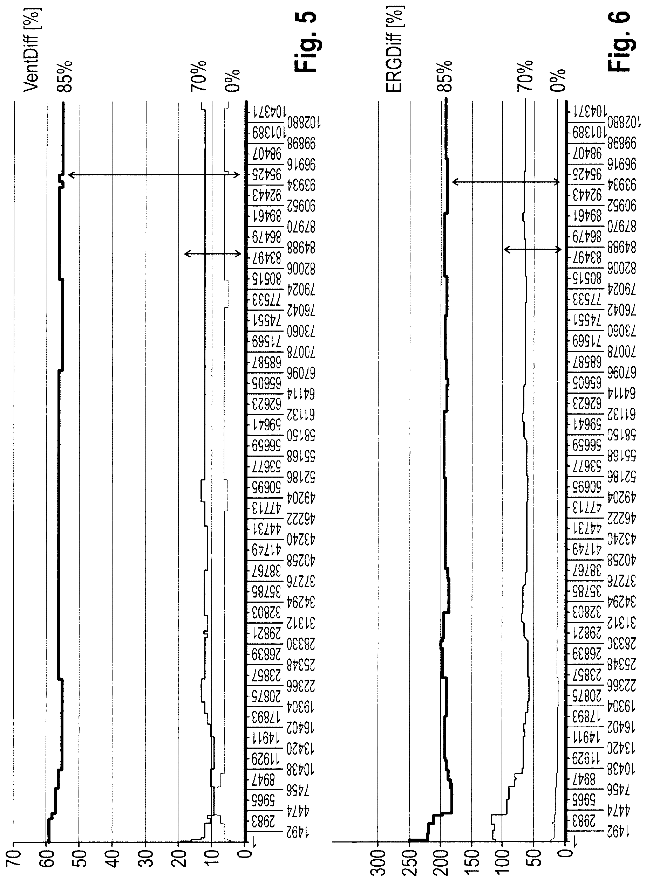

In den nachfolgenden Fig. 5 und 6 wird die absolute mittlere Differenz im Venturi-Rohr und des AGR-Stellers über die Betriebszeit (sample time = 100 ms) exemplarisch dargestellt. Die untere Linie zeigt den Verlauf bei 0 % Versottungsgrad. (Ein "Grundbelag" ist immer vorhanden, die 0 % sind somit eine theoretische Annahme.) Die mittlere Linie zeigt den Verlauf bei einem Versottungsgrad von 70 % und die obere Linie bei 85 %. Die Daten wurden am Motorprüfstand reproduzierbar gemessen und aufgezeichnet.

In Fig. 5 beträgt der Differenzdrift (Pfeile) von 0 % zu 70 % Versottungsgrad ca. 6 % und von 0 % zu 85 % ca. 50 % Drift.

Auch in Fig. 6 ist der Versottungsgrad eindeutig zu erkennen. Bei einem Versottungsgrad von 70 % ist ein Drift von 54 % messbar und bei einem Versottungsgrad von 85 % ist ein eindeutiger Drift von 180 % nachweisbar. Auch diese Messungen wurden am Motorprüfstand mit dem oben beschriebenen Verfahren durchgeführt und reproduzierbar vermessen. Als Grundlage für die Messung dient ein hoch dynamisches Lastkollektiv, welches über mehrere Stunden vermessen wurde. Nach einer kurzen Einschwingphase (Erreichen der Betriebstemperatur) kann man den vorab definierten (versotteter AGR-Kühler eingebaut) Versottungsgrad des AGR-Kühlers deutlich erkennen. Ein wichtiges Merkmal ist, dass der erkannte Versottungsgrad über die Lastkollektiv-Laufzeit konstant ist. Dies zeigt, dass das Verfahren auch bei hoch dynamischen Wechsellasten robust arbeitet.

Für die Prognose wird das Verfahren der Zeitreihenanalyse in Kombination mit dem Verfahren der Exponentiellen Glättung verwendet. Hierfür wird ein lineares Trendmodell verwendet zur stückweisen linearen Approximation (Forecast) des Prozesses. Durch Unterabtastung (Abtastung im Stundenbereich) wird der Prozess stark geglättet, was sich vorteilhaft auf die lineare Approximation auswirkt. Der Forecast wird jeweils für die drei absoluten gemittelten Differenzen vom Venturi-Rohr-Differenzdruck, der AGR-Stellerposition und der AGR-Temperatur hinter AGR-Kühler berechnet. Mit dem Forecast kann prognostiziert werden, wann ein Schwellwert erreicht bzw. überschritten sein wird.

Berechnung 1. Ordnung als Zwischenwert:

$Z1_t$ [%]  = Zwischenwert der Exponentiellen Glättung 1. Ordnung
α  = Glättungskonstante für Exponentiellen Glättung 1. Ordnung
Obsrv [%]  = aktueller Wert der mittleren rel. Abweichung ($\partial$Position, $\partial$PVenturi, etc.)
$Z1_{t-1}$ [%]  = vorheriger Zwischenwert

$$Z1_t = \alpha \cdot o_{bsrv} + (1 - \alpha) \cdot Z1_{t-1} \qquad\qquad (1)$$

Berechnung 2. Ordnung:

Z2t [%]  = Zwischenwert der Exponentiellen Glättung 2. Ordnung
β  = Glättungskonstante für Exponentiellen Glättung 2. Ordnung
Z1t [%]  = Zwischenwert der Exponentiellen Glättung 1. Ordnung
$Z2_{t-1}$ [%]  = vorheriger Zwischenwert

$$Z2_t = \beta \cdot Z1_t + (1 - \beta) \cdot Z2_{t-1} \qquad\qquad (2)$$

Die Glättungskonstanten (α und β) können mittels Felddaten und Simulation des Prozesses oder mit Hilfe eines Optimierungsverfahrens ermittelt werden.

Nachdem die Exponentielle Glättung berechnet wurde (für den gesamten Forecast Horizont), werden die einzelnen Forecast-Ergebnisse z. B. in einem Datenarray (Forecast Vector $Forecast_{vec}$) mit der Länge des Forecast Horizonts abgespeichert. Der gewünschte Forecast Wert $Forecast_{val}$ entspricht dem letzten Eintrag im Daten Array.

Eine weitere Möglichkeit besteht darin, einen Zeitpunkt zu berechnen, zu welchem der maximale oder ein vorab definierter Versottungsgrad des AGR-Kühlers erreicht sein wird. Dies gelingt durch Anwendung der Formeln 3 bis 5. Es wird die Steigung m über den gesamten Forecast Horizont (also die mittlere Steigung) und der Y-Achsenabschnitt berechnet. Dann wird die Geradengleichung nach der Betriebszeit aufgelöst. $o_{bsrvMax}$ entspricht in diesem Fall 100 % Versottungsgrad.

$Forecast_{time}$ [h]  = Betriebszeit in Stunden bis Erreichen $o_{bsrvMax}$
$o_{bsrvMax}$ [%]  = Obere Schwelle des Verschleißes, hier: 100 % Versottungsgrad
m  = Steigung
b [%]  = Y-Achsenabschnitt
$Z1_{t+FCH}$ [%]  = Zwischenwert der Exp. Glättung 1. Ordnung zum Zeitpunkt $FCH$
$FCH$ [h]  = Forecast Horizont (z. B. 10 • 5 (Beobachtungsintervall) = 50 = $FCH$
$Z2_{t+FCH-1}$[%]  = Zwischenwert der Exp. Glättung 2. Ordnung zum Zeitpunkt $FCH$ - 1
$Forecast_{vec}$[%]  = Forecast Vektor der Länge $FCH$
$T_{observ}$ [h]  = Beobachtungsintervall, eine Forecast Berechnung je $T_{observ}$

$$Forecast_{time} = \left| \frac{(O_{bsrvMax}-b)}{m} \right| \qquad (3)$$

Mit:

Y-Achsenabschnitt $b$:

$$b = (2 \cdot Z1_{t+FCH}) - Z2_{t+FCH-1} \qquad (4)$$

Steigung m:

$$m = \frac{Forecast_{vec}[end] - Forecast_{vec}[start]}{T_{observ} \cdot length(Forecast_{vec})} \qquad (5)$$

Das Vorhersageergebnis wird während der Laufzeit permanent überwacht. Dazu wird der Prognosefehler (MAPE, Mean Absolut Percentage Error, siehe Formel 6) periodisch bestimmt. Zeichnet sich eine zu hohe Abweichung über mehrere Perioden ab, werden die Glättungskoeffizienten der Exponentiellen Glättung stärker angepasst. Ist die Abweichung gering, werden die Glättungsfaktoren gering oder nicht angepasst.

$$M = \frac{100}{n} \sum_{t=1}^{n} \left| \frac{A_t - F_t}{A_t} \right| \qquad (6)$$

$M$ [%]      = MAPE
$n$            = Anzahl der Prognosen
$A_t$ [%]     = aktueller Wert der mittleren rel. Abweichung
$F_t$ [%]     = Prognostizierter Wert der mittleren rel. Abweichung

Die Prognose des erreichten Versottungsgrads bzw. der restlichen Betriebszeit wird mit dem Regelwartungsintervall des Verbrennungsmotors abgeglichen. Kann ein Regelwartungsintervall zeitlich nicht erreicht werden, da die verbleibende Betriebszeit geringer ist als die Differenz aus Zeitpunkt des Regelwartungsintervalls und verbleibender Betriebszeit, wird der einzuhaltende Zeitpunkt der Wartung aufgrund des Versottungsgrads kommuniziert bzw. gespeichert. Kann das Regelwartungsintervall zeitlich erreicht werden, wird der Status kommuniziert, dass der AGR-Kühler bei der nächsten Regelwartung getauscht werden sollte. Wird keine rechtzeitige Wartung des AGR-Kühlers durchgeführt, wird ein Diagnosestatus aktiviert.

**Patentansprüche**

1.   Verfahren zur Detektion und Prädiktion eines Versottungsprozesses im Abgasrückführungskühler (AGR-Kühler) eines Diesel-Verbrennungsmotors mit wenigstens einem Motorsteuergerät, umfassend:
ein erstes Messverfahren zur Identifizierung von Referenzwerten, die an einem Prüfstand gemessen werden,

    - wobei ein neuer AGR-Kühler an einem baugleichen Prüfstandsreferenzmotor montiert wird,
    - für die Vermessung ein Design of Experiment-Messplan erstellt wird,
    - ein Prüfstandsystem den Design of Experiment-Messplan einliest, die Stützstellen einstellt und autonom die selektierten Referenzwerte vermisst,
    - künstliche neuronale Netzwerke mit Hilfe der Referenzwerte samt der Stützstellen trainiert werden; und
    - in einem nächsten Schritt die so ermittelten Referenzdaten der trainierten künstlichen neuronalen Netzwerke in ein Serien-Motorsteuergerät übermittelt und dort dauerhaft gespeichert werden, wobei ein zweites Messverfahren zur Detektion und Prädiktion der Versottung des Abgasrückführungskühlers vorgesehen ist,
    - wobei im regulären Motorbetrieb Vorbedingungen geprüft werden und, falls die Vorbedingungen erfüllt sind, die trainierten neuronalen Netzwerke die besagten Referenzwerte ständig ermitteln sowie eine Ist-Zustandsbeschreibung des Abgasrückführungskühlers vorgenommen wird, wobei jeweils eine gemittelte Differenz zwischen Ist- und besagten Referenzwerten ermittelt wird, wobei die gemittelte Differenz eine Kennzahl für die Ist-Zustandsbeschreibung des Abgasrückführungskühlers ist, und sowie mittels einer Vorhersagerechnung, eine künftige Zustandsbeschreibung des Abgasrückführungskühlers vorgenommen wird,

**dadurch gekennzeichnet, dass** jeweils der Venturi-Rohr-Differenzdruck in der AGR-Strecke, eine AGR-Stellerposition und eine Temperatur hinter einem AGR-Kühler einer der Referenzwerte ist; und H dass

zur Vorhersage der Versottung des Abgasrückführungskühlers ein Verfahren einer Zeitreihenanalyse in Kombination mit einem Verfahren einer exponentiellen Glättung verwendet wird, wobei ein lineares Trendmodell zur stückweisen linearen Approximation dafür verwendet wird, und wobei jeweils für die drei absolut gemittelte Differenzen prognostiziert wird wann ein Schwellwert erreicht oder überschritten sein wird, und

dass die Referenzwerte, die Ist-Zustandsbeschreibung des Abgasrückführungskühlers und die künftige Zustandsbeschreibung des Abgasrückführungskühlers im Motorsteuergerät und/oder in einem Fehlerspeicher gespeichert und/oder in einem Servicedisplay, verbunden mit einem Service- oder Wechselhinweis versehen, angezeigt werden.

2. Verfahren zur Detektion und Prädiktion eines Versottungsprozesses im Abgasrückführungskühler eines Diesel-Verbrennungsmotors nach Anspruch 1, **dadurch gekennzeichnet, dass** die Vorbedingungen einen oder mehrere der nachfolgenden Parameter umfassen: Umgebungsdruck, Öl- oder Kühlmitteltemperatur, Umgebungstemperatur, Ladeluftdruck, Drehzahl, Einspritzmenge.

3. Diesel-Verbrennungsmotor,
**dadurch gekennzeichnet, dass** ein Verfahren nach einem oder mehreren der vorgenannten Ansprüche bei ihm zum Einsatz kommt.

**Claims**

1. Method for detecting and predicting a soot formation process in the exhaust-gas recirculation cooler (EGR cooler) of a diesel internal combustion engine having at least one engine control unit, the method comprising:
a first measuring method for identifying reference values measured on a test bench,

- wherein a new EGR cooler is installed on an identical test bench reference engine,
- a design of experiment measurement plan is created for the measurement,
- a test bench system reads in the design of experiment measurement plan, sets the grid points and autonomously measures the selected reference values,
- artificial neural networks are trained using the reference values and the grid points; and
- in a next step, the reference data of the trained artificial neural networks so determined are transmitted to a series engine control unit and permanently stored there,
wherein a second measuring method for detecting and predicting the soot formation of the exhaust-gas recirculation cooler is provided,
- wherein during normal engine operation, preconditions are checked and if the preconditions are met the trained neural networks continuously determine said reference values, and an actual state description of the exhaust-gas recirculation cooler is performed, wherein a respective averaged difference between actual and said reference values is determined in each case, wherein the averaged difference is an indicator for the actual state description of the exhaust-gas recirculation cooler,
and a future state description of the exhaust-gas recirculation cooler is also performed using a prediction calculation,

**characterized in that** the venturi tube differential pressure in the EGR path, an EGR actuator position and a temperature after an EGR cooler are each one of the reference values; and
**in that** to predict the soot formation of the exhaust-gas recirculation cooler, a time-series analysis method is used in combination with a method of exponential smoothing,
wherein a linear trend model for piecewise linear approximation is used for this purpose, and
wherein a prediction is made as to when a threshold value will be reached or exceeded for each of the three absolute averaged differences, and

**in that** the reference values, the actual state description of the exhaust-gas recirculation cooler and the future state description of the exhaust-gas recirculation cooler are stored in the engine control unit and/or in a fault memory and/or are displayed in a service display, provided in connection with a service or replacement notification.

2. Method for detecting and predicting a soot formation process in the exhaust-gas recirculation cooler of a diesel internal combustion engine according to claim 1, **characterized in that** the preconditions include one or more of the following parameters: ambient pressure, oil or coolant temperature, ambient temperature, charging-air pressure, rpm, injection amount.

3. Diesel internal combustion engine,
   **characterized in that** a method according to one or more of the preceding claims is used therein.

**Revendications**

1. Procédé de détection et de prédiction d'un processus d'encrassement dans le refroidisseur de recirculation des gaz d'échappement (refroidisseur EGR) d'un moteur diesel à combustion interne muni d'au moins un appareil de commande du moteur, comprenant :
   un premier procédé de mesure permettant d'identifier des valeurs de référence mesurées sur un banc d'essai,

   - où un nouveau refroidisseur EGR est monté sur un moteur de référence de banc d'essai de conception identique,
   - un plan de mesure Design of Experiment est établi pour le relevé,
   - un système de banc d'essai lit le plan de mesure Design of Experiment, paramètre les points d'appui et mesure de manière autonome les valeurs de référence sélectionnées,
   - des réseaux neuronaux artificiels sont entraînés à l'aide des valeurs de référence et des points d'appui ; et
   - dans une prochaine étape, les données de référence des réseaux neuronaux artificiels entraînés ainsi calculées sont transmises à un appareil de commande de moteur de série et y sont stockées durablement,
   où un deuxième procédé de mesure est prévu pour la détection et la prédiction de l'encrassement du refroidisseur de recirculation des gaz d'échappement,
   - où, en fonctionnement régulier du moteur, des conditions préalables sont vérifiées et, si les conditions préalables sont remplies, les réseaux neuronaux entraînés calculent en permanence lesdites valeurs de référence et une description de l'état réel du refroidisseur de recirculation des gaz d'échappement est effectuée, où une différence moyenne entre les valeurs réelles et lesdites valeurs de référence est à chaque fois calculée, où la différence moyenne est un indicateur pour la description de l'état réel du refroidisseur de recirculation des gaz d'échappement,
   et où une description de l'état futur du refroidisseur de recirculation des gaz d'échappement est effectuée au moyen d'un calcul de prédiction,

   **caractérisé en ce que** la pression différentielle du venturi dans le trajet EGR, une position de l'actionneur EGR et une température en aval d'un refroidisseur EGR sont respectivement l'une des valeurs de référence ; et
   **en ce que**, pour prédire l'encrassement du refroidisseur de recirculation des gaz d'échappement, on utilise un procédé d'analyse de séries temporelles en combinaison avec un procédé de lissage exponentiel, où un modèle de tendance linéaire pour une approximation linéaire par morceaux est utilisé à cet effet, et où l'on pronostique respectivement pour les trois différences moyennes absolues quand une valeur seuil sera atteinte ou dépassée, et

   **en ce que** les valeurs de référence, la description de l'état réel du refroidisseur de recirculation des gaz d'échappement et la description de l'état futur du refroidisseur de recirculation des gaz d'échappement sont mémorisées dans l'appareil de commande du moteur et/ou dans une mémoire d'erreurs et/ou affichées sur un écran de service, reliées à une instruction de service ou de remplacement.

2. Procédé de détection et de prédiction d'un processus d'encrassement dans le refroidisseur de recirculation des gaz d'échappement d'un moteur diesel à combustion interne selon la revendication 1, **caractérisé en ce que** les conditions préalables comprennent un ou plusieurs des paramètres suivants : pression ambiante, température de l'huile ou du liquide de refroidissement, température ambiante, pression de suralimentation, nombre de tours, quantité d'injection.

3. Moteur diesel à combustion interne,
   **caractérisé en ce qu'**un procédé selon l'une ou plusieurs des revendications précédentes est utilisé pour celui-ci.

AGR Kühler ↔ Diesel Motor

1.

5.
Berechnung
in ECU

2.
Vermessung

Motorsteuer-gerät (ECU)

Prüfstandsystem

DoE Plan

3.
Referenzwerte

Evaluation

Training: kNN1-3

Auswertung z.B. durch Service

4.
Kalibrierung

Handlungsempfehlung / Versottungsgrad / Restlaufzeit / Warnlevel

Fig. 1

EP 3 864 279 B1

Fig. 2

**Fig. 3**

EP 3 864 279 B1

$T_{AGR}$      $POS_{AGR}$      $dP_{Vent}$

  ⬆ steigt     ⬆    ⬇ fällt

## Fig. 4

| Signal | EGRpos [%] | $\partial$Venturi [%] | EGRTemp [%] |
|--------|-----------|----------------------|-------------|
| Verlauf absolute mittlere Differenz & Schwelle | | | |

Wahrheitstabelle    $\partial$ > Schwellwert →true    $\partial$ > Schwellwert →true    $\partial$ > Schwellwert →true

Versottungsprozess aktiv wenn: EGRpos == true & & $\partial$Venturi == true & & EGRTemp == true

**Tabelle 1: Verlauf der absoluten gemittelten Differenz mit Schwellwertüberwachung**

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- PREDICTION OF FOULING IN EGR COOLERS WITH RADIAL BASIS FUNCTION NEURAL NETWORKS. *PROCEEDINGS OF INTERNATIONAL CONFERENCE ON HEAT EXCHANGER FOULING AND CLEANING''*, Budapest, Ungarn, 09. Juni 2013